# EUROPEAN PATENT SPECIFICATION

(11) **EP 2 746 604 B1**
(45) Date of publication and mention of the grant of the patent: **05.09.2018**
(21) Application number: 13197960.1
(22) Date of filing: 18.12.2013
(51) Int. Cl.: F16C 19/00, F16C 33/62

(54) **Rolling bearing intended to undergo a surface fatigue phenomenon**
Auf Oberflächenermüdungserscheinung zu beanspruchendes Wälzlager
Roulement destiné à subir un phénomène de fatigue de surface

(30) Priority: 21.12.2012 FR 1262631
(43) Date of publication of application: 25.06.2014
(73) Proprietor: SKF Aerospace France, 26240 Saint Vallier (FR)
(72) Inventor: Le Jeune, Gwénolé, 26210 SAINT SORLIN EN VALLOIRE (FR); Maheo, Yves, 26140 ANNEYRON (FR)
(74) Representative: Lavoix

(56) References cited:
- GB-A- 575 663
- GB-A- 613 275
- GB-A- 2 245 318
- US-A- 3 782 794
- US-A1- 2010 189 385

## Description

The present invention relates to a bearing, of the type intended to undergo a surface fatigue phenomenon.

Already known, in the state of the art (e.g. in GB 2 245 318), is a bearing including:
- an outer ring, with a shape generally of revolution around an axis,
- an inner ring, with a shape generally of revolution around said axis, positioned coaxially to the outer ring, and
- bearing elements, for example balls, rollers or needles, positioned radially between the inner ring and the outer ring.

Typically, the bearing is lubricated, such that an elastohydrodynamic lubrication film is formed between the rolling elements and each inner and outer ring, so as to avoid direct contact between those rolling elements and said inner and outer rings.

In such a bearing, in which the elastohydrodynamic film is formed correctly, the rings are subjected to a fatigue phenomenon called a "sublayer" phenomenon. Such a sublayer fatigue phenomenon is due to the fact that the maximum strain level, in each bearing ring, is situated several tens of micrometers below the contact area between the rolling surfaces and said rolling ring, and not on its surface. Thus, under the lubrication conditions, it is these sublayer strains that are the source of ruptures, and therefore influence the lifespan of the bearing.

The present inventors have nevertheless observed that, in certain cases, the elastohydrodynamic film does not form correctly, with the result that the rolling elements are at least partially in direct contact with at least one of the inner and outer rings.

In the present description, an area of a ring is said to be "in direct contact" with the rolling elements when that area is in contact with the rolling elements without a lubricant film being interposed.

In that case, the maximum strains are situated at the interface between the rolling ring and the rolling element, with the result that a fatigue phenomenon appears on the surface rather than in the sublayer.

The lubricating film does not form correctly when the bearing is positioned in a mechanical device of the type including a part rotatable around a pivot link including at least the bearing, having a structure involving the appearance of the surface fatigue phenomenon on at least one of the outer or inner rings of the bearing, at the interface between said outer or inner ring and the rolling elements. Such a mechanical device is known (e.g. from GB 575 663). Thus, the present inventors have identified the structures involving the appearance of such a surface fatigue phenomenon, i.e., preventing the lubricant film from forming correctly.

In particular, they have observed that a structure applying a radial contact pressure on the bearing can prevent the formation of the lubricant film when the contact pressure is sufficient. In particular, certain pressure and/or rotational speed conditions do not allow the formation of the lubricant film. For example, in certain cases, a radial contact pressure comprised between 500 and 7500 MPA does not allow the formation of the lubricant film.

It will be noted that the surface fatigue phenomena are generally worsened in case of pollution of the bearing, in particular when solid particles are found in the bearing, at the interface between one of the rings and the rolling elements, such solid particles indenting the rolling path of the ring, thereby generally causing local ruptures in the lubricant film.

The surface fatigue may also be worsened more or less based the temperature.

The inventors have also recognized that the lubricant film does not form correctly when a structure imposes an oscillating movement of the outer ring in rotation around the axis relative to the inner ring. Such an oscillating movement corresponds to a rotation of the outer ring by a limited angle, smaller than 360°, alternating in a first direction of rotation, then in a second direction of rotation.

Of course, the lubricant film does not form correctly in the case of a structure applying both a radial contact pressure as mentioned above, and involving an oscillating movement as defined above.

It appears that traditional bearings have a short lifespan when they are subjected to surface fatigue phenomena.

The invention in particular aims to resolve this drawback, by providing a bearing having good wear resistance when it is subjected to a surface fatigue phenomenon.

To that end, the invention in particular relates to a mechanical device according to claim 1.

In other words, "at least partially in direct contact with the rolling elements" is achieved using a manufacturing method based on powder metallurgy.

It should be noted that a bearing maker, who is the person skilled in the art, would not have considered powder metallurgy to produce a bearing ring, because powder metallurgy generally involves volume defects, due to the density, porosity, compacting defaults and oxygen content of the material. In fact, a bearing maker is typically interested in the volume health of a bearing ring, and not its surface health, in particular in the case of bearings subjected to structural fatigue, such as flanged bearings, under contact pressures greater than 1 GPa.

The invention provides for the use of powder metallurgy to manufacture a bearing in which the rolling elements are at least partially in direct contact with at least one of the rings, such that that bearing is subject to surface fatigue and not sublayer fatigue, such that the effects of the volume defects are negligible.

Thus, surprisingly for a bearing maker, powder metallurgy makes it possible to provide bearing rings having good characteristics relative to corrosion strength and high temperature hardness, with the result that such a ring withstands a surface fatigue phenomenon particularly well.

Preferably, at least one of the rings at least partially in direct contact with the rolling elements is made with a base of sintered steel powder.

The mechanical device forms the environment of a bearing subject to a surface fatigue phenomenon.

Optionally, the mechanical device may include one or more of the following features, considered alone or according to any technically possible combinations:
- said radial contact pressure is comprised between 500 and 7500 MPa;
- the structure involving the appearance of a surface fatigue phenomenon imposes a maximum speed of rotation of the outer ring relative to the inner ring, that maximum speed being substantially equal to 1 m/s;
- the mechanical device forming an air vehicle wing, the moving part forms a flap of the wing.

The invention will be better understood upon reading the following description, provided solely as an example and done in reference to the appended figures, in which:
- figure 1 shows a ball bearing according to one example embodiment of the invention;
- figure 2 shows an example of a mechanical device, in particular, an airplane wing, using the ball bearing of figure 1.

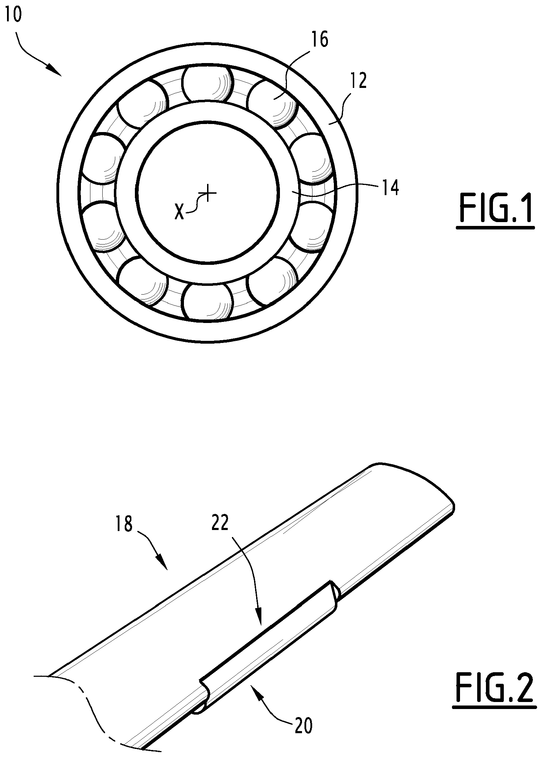

Figure 1 shows a bearing 10, having a traditional structure.

In particular, the bearing 10 includes:
- an outer ring 12 with a shape generally of revolution around an axis X,
- an inner ring 14, with a shape generally of revolution around the axis X, positioned coaxially to the outer ring 12, and
- rolling elements, in particular balls 16, positioned radially between the inner ring 14 and the outer ring 12.

It will be noted that the bearing 10 is a ball bearing, but it may alternatively equivalently be formed by a roller bearing, needle bearing, or any other bearing element.

The balls 16 extend in rolling paths formed on the one hand on an outer circumferential surface of the inner ring 14, and on the other hand on an inner circumferential surface of the outer ring 12.

In the ball bearing 10, the balls 16 are at least partially in direct contact with at least one of the inner and outer rings, and preferably with both. It will be recalled that an area of a ball 16 is considered to be in direct contact with an area of a ring 12, 14 when no lubricant film is inserted between those areas.

As previously indicated, the inner 14 and outer 12 rings, which are at least partially in direct contact with the balls 16, are subject to a surface fatigue phenomenon.

In order to have a good strength with respect to this surface fatigue phenomenon, each of the rings 12, 14 that is at least partially in direct contact with the balls 16 is made from a base of a sintered material powder, preferably a sintered steel powder. In other words, such a ring is manufactured using a powder metallurgy method. One example of a manufacturing method based on powder metallurgy is described below.

During a prior step, a powder of a material, in particular steel, is provided whereof the steel grade is chosen to have suitable strength and hardness characteristics for the anticipated use of the ball bearing to be manufactured.

The method includes a step for sintering said steel powder, said sintering step for example being done by isostatic hot compacting of the steel powder. During that sintering step, the grains of the steel powder becomes secured to each other under the effect of the heat and pressure. The steel obtained at the end of this sintering step will be called "sintered steel" below.

The method next includes a step for forging the sintered steel, for forming a steel bar. This forging is calibrated such that the steel bar has a diameter larger than or equal to the predetermined outer diameter of the ring to be manufactured.

The method next includes a step for cutting the steel bar, so as to form a washer with dimensions substantially larger than or equal to predetermined dimensions of the ring to be manufactured. In particular, the washer has a same height in a longitudinal direction as the ring to be manufactured.

The method next includes a step for machining the steel washer, to form the bearing ring. In particular, the machining is done so as to impart an annular shape to the bearing ring, while forming a central orifice in the washer, so as to delimit an inner circumferential surface therein. The outer circumferential surface is also machined to correct the outer diameter of the ring, so that its diameter is substantially equal to a predetermined diameter of the ring to be manufactured.

The method next includes a thermal treatment step, intended to give the ring optimal hardness and wear resistance properties.

The method lastly includes a grinding step, to give the bearing ring its predetermined final shape and dimensions. In particular, during this grinding step, the bearing path intended to receive and guide the balls is formed, that path being formed on the inner surface of the ring if it involves an outer ring, or on the outer surface of the ring if it involves an inner ring.

Figure 2 shows an example of a mechanical device 18 using a ball bearing 10 like that described above. In particular, the mechanical device 18 includes at least one moving part 20 rotatable around a pivot link 22 comprising at least one ball bearing 10 as previously described.

In the illustrated example, the mechanical device 18 is an airplane wing, and the moving part 20 is for example a flap of that wing 18.

It will be noted that such a mechanical device 18 has a structure involving the appearance of a surface fatigue phenomenon over at least one of the outer 12 or inner 14 rings of the ball bearing 10, at the interface between that outer 12 or inner 14 ring and the balls 16. In other words, the structure of the mechanical device 18 prevents the correct formation of a lubricant film between each of the outer 12 and inner 14 rings and the balls 16.

In the case of a wing, the structure of that wing applies a radial contact pressure on the bearing 10, significant enough to prevent the correct formation of a lubricant film between the outer 12 or inner 14 ring and the balls 16, and thus to at least partially maintain direct contact between said inner 14 or outer 12 ring and the balls 16. This radial contact pressure, in particular due to the flight conditions, is comprised between 500 and 5000 MPa.

Furthermore, the structure of the wing 18, connected to the function of the flap 20, imposes an oscillating movement of the outer ring 12 in rotation around the axis X relative to the inner ring 14. Such an oscillating movement also prevents correct formation of a lubricant film between the outer 12 or inner 14 ring and the balls 16, and thus at least partially maintains direct contact between said inner 14 or outer 12 ring and the balls 16. In fact, a wing flap 20 is only intended to rotate by a limited angle, generally comprised between 0 and 90° in a first direction (to open the flap) or a second opposite direction (to close the flap) of rotation. Thus, the outer ring 12 never performs a complete revolution around the inner ring 14.

Lastly, the structure of the wing, related to the function of the flap 20, imposes a maximum speed of rotation of the outer ring 12 relative to the inner ring 14, that maximum speed being substantially equal to 1 m/s. Such a maximum speed also participates in maintaining direct contact between the inner ring 14 or outer ring 12 and the balls 16.

It will be noted that the invention is not limited to the embodiment previously described, but may assume various alternatives without going beyond the scope of the claims.

In particular, the mechanical device 18 may be different from a wing, as long as it has a structure involving the appearance of a surface fatigue phenomenon, i.e., involving direct contact on the bearing not allowing the correct formation of a lubricant film, and/or a structure imposing an oscillating movement of the outer ring relative to the inner ring.

## Claims

1. A mechanical device (18), including a part (20) rotatable around a pivot link (22), the pivot link (22) comprising at least one bearing (10), said bearing (10) including:
- an outer ring (12), with a shape generally of revolution around an axis (X),
- an inner ring (14), with a shape generally of revolution around the axis (X), positioned coaxially to the outer ring (12),
- rolling elements (16), for example balls, positioned radially between the inner ring (14) and the outer ring (12),
wherein the rolling elements (16) are at least partially in direct contact with at least one of the inner (14) and outer (12) rings, and wherein said mechanical device (18) has a structure involving the appearance of a surface fatigue phenomenon on at least one of the outer (12) or inner (14) rings of the bearing (10), at the interface between said outer (12) or inner (14) ring and the rolling elements (16),
wherein the structure involving the appearance of a surface fatigue phenomenon applies a radial contact pressure on the bearing (10), preventing correct formation of a lubricant film between the outer (12) or inner (14) ring and the rolling elements (16) and at least partially maintaining direct contact between said inner (14) or outer (12) ring and the rolling elements (16), and/or the structure involving the appearance of a surface fatigue phenomenon imposes an oscillating movement of the outer ring (12) rotating around the axis (X) relative to the inner ring (14), such an oscillating movement preventing correct formation of a lubricant film between the outer (12) or inner (14) ring and the rolling elements (16) and at least partially maintaining direct contact between said inner (14) or outer (12) ring and the rolling elements (16),
**characterized in that** at least one of the rings (12, 14) at least partially in direct contact with the rolling elements (16) is made with a base of a powder of a sintered material.

2. The mechanical device (18) according to claim 1, wherein at least one of the rings (12, 14) at least partially in direct contact with the rolling elements (16) is made with a base of sintered steel powder.

3. The mechanical device (18) according to claim 1 or 2, wherein said radial contact pressure is comprised between 500 and 7500 MPa.

4. The mechanical device (18) according to any one of claims 1 to 3, wherein the structure involving the appearance of a surface fatigue phenomenon imposes a maximum speed of rotation of the outer ring (12) relative to the inner ring (14), that maximum speed being substantially equal to 1 m/s.

5. The mechanical device (18) according to any one of claims 1 to 4, forming an air vehicle wing, the moving part (20) forming a flap of the wing.

## Patentansprüche

1. Mechanische Vorrichtung (18), die ein um eine Schwenkverbindung (22) drehbares Teil (20) enthält, wobei die Schwenkverbindung (22) mindestens ein Lager (10) umfasst, wobei das Lager (10) Folgendes enthält:
- einen Außenring (12) mit einer um eine Achse (X) allgemein rotationssymmetrischen Form,
- einen Innenring (14) mit einer um die Achse (X) allgemein rotationssymmetrischen Form, der koaxial zu dem Außenring (12) positioniert ist,
- Wälzkörper (16), zum Beispiel Kugeln, die radial zwischen dem Innenring (14) und dem Außenring (12) positioniert sind,
wobei die Wälzkörper (16) mit dem Innenring (14) und/oder Außenring (12) zumindest teilweise in Kontakt stehen und wobei die mechanische Vorrichtung (18) eine Struktur aufweist, die das Auftreten einer Oberflächenermüdungserscheinung auf dem Außenring (12) und/oder dem Innenring (14) des Lagers (10) an der Grenzfläche zwischen dem Außenring (12) oder dem Innenring (14) und den Wälzkörpern (16) umfasst,
wobei die Struktur, die das Auftreten einer Oberflächenermüdungserscheinung umfasst, einen Radialkontaktdruck auf das Lager (10) ausübt, der die ordnungsgemäße Bildung eines Schmierfilms zwischen dem Außenring (12) oder dem Innenring (14) und den Wälzkörpern (16) verhindert und direkten Kontakt zwischen dem Innenring (14) oder dem Außenring (12) und den Wälzkörpern (16) zumindest teilweise verhindert, und/oder die Struktur, die das Auftreten einer Oberflächenermüdungserscheinung umfasst, den sich um die Achse (X) bezüglich des Innenrings (14) drehenden Außenring (12) mit einer oszillierenden Bewegung beaufschlagt, wobei solch eine oszillierende Bewegung die ordnungsgemäße Bildung eines Schmierfilms zwischen dem Außenring (12) und dem Innenring (14) und den Wälzkörpern (16) verhindert und direkten Kontakt zwischen dem Innenring (14) oder dem Außenring (12) und den Wälzkörpern (16) zumindest teilweise verhindert,
**dadurch gekennzeichnet, dass** mindestens einer der Ringe (12, 14), der zumindest teilweise in direktem Kontakt mit den Wälzkörpern (16) steht, auf Basis eines Pulvers eines gesinterten Materials hergestellt ist.

2. Mechanische Vorrichtung (18) nach Anspruch, wobei mindestens einer der Ringe (12, 14), der zumindest teilweise in direktem Kontakt mit den Wälzkörpern (16) steht, auf Basis eines gesinterten Stahlpulvers hergestellt ist.

3. Mechanische Vorrichtung (18) nach Anspruch 1 oder 2, wobei der Radialkontaktdruck zwischen 500 und 7500 MPa liegt.

4. Mechanische Vorrichtung (18) nach einem der Ansprüche 1 bis 3, wobei die Struktur, die das Auftreten einer Oberflächenermüdungserscheinung umfasst, den Außenring (12) bezüglich des Innenrings (14) mit einer maximalen Drehgeschwindigkeit beaufschlagt, wobei die maximale Drehzahl im Wesentlichen gleich 1 m/s ist.

5. Mechanische Vorrichtung (18) nach einem der Ansprüche 1 bis 4, die einen Luftfahrzeugflügel bildet, wobei das sich bewegende Teil (20) eine Klappe des Flügels bildet.

## Revendications

1. Dispositif mécanique (18), comportant une pièce (20) pouvant tourner autour d'une liaison pivotante (22), la liaison pivotante (22) comprenant au moins un palier (10), ledit palier (10) comportant :
- une bague extérieure (12) ayant généralement une forme de révolution autour d'un axe (X),
- une bague intérieure (14) ayant généralement une forme de révolution autour de l'axe (X), positionnée coaxialement par rapport à la bague extérieure (12),
- des éléments de roulement (16), par exemple des billes, positionnés radialement entre la bague intérieure (14) et la bague extérieure (12),
les éléments de roulement (16) étant au moins en partie en contact direct avec au moins l'une de la bague intérieure (14) et de la bague extérieure (12), et ledit dispositif mécanique (18) ayant une structure associée à l'apparition d'un phénomène de fatigue de surface sur au moins l'une de la bague extérieure (12) et de la bague intérieure (14) du palier (10) au niveau de l'interface entre ladite bague extérieure (12) ou ladite bague intérieure (14) et les éléments de roulement (16),
la structure associée à l'apparition d'un phénomène de fatigue de surface appliquant une pression de contact radial sur le palier (10), empêchant une formation correcte d'un film de lubrifiant entre la bague extérieure (12) ou la bague intérieure (14) et les éléments de roulement (16) et maintenant au moins en partie un contact direct entre ladite bague intérieure (14) ou ladite bague extérieure (12) et les éléments de roulement (16), et/ou la structure associée à l'apparition d'un phénomène de fatigue de surface imposant un mouvement d'oscillation de la bague extérieure (12) tournant autour de l'axe (X) par rapport à la bague intérieure (14), tel qu'un mouvement d'oscillation empêchant une formation correcte d'un film de lubrifiant entre la bague extérieure (12) ou la bague intérieure (14) et les éléments de roulement (16) et maintenant au moins en partie un contact direct entre ladite bague intérieure (14) ou ladite bague extérieure (12) et les éléments de roulement (16),
**caractérisé en ce qu'**au moins l'une des bagues (12, 14) au moins en partie en contact direct avec les éléments de roulement (16) est fabriquée avec une base constituée d'un matériaux fritté pulvérulent.

2. Dispositif mécanique (18) selon la revendication 1, dans laquelle au moins l'une des bagues (12, 14) au moins en partie en contact direct avec les éléments de roulement (16) est fabriquée avec une base en acier fritté pulvérulent.

3. Dispositif mécanique (18) selon la revendication 1 ou 2, dans laquelle ladite pression de contact radial est comprise entre 500 et 7500 MPa.

4. Dispositif mécanique (18) selon l'une quelconque des revendications 1 à 3, dans lequel la structure associée à l'apparition d'un phénomène de fatigue de surface impose une vitesse de rotation maximale de la bague extérieure (12) par rapport à la bague intérieure (14), cette vitesse maximale étant sensiblement égale à 1 m/s.

5. Dispositif mécanique (18) selon l'une quelconque des revendications 1 à 4, formant une aile d'engin volant, la partie mobile (20) formant un volet d'aile.
